Europäisches Patentamt

European Patent Office

Office européen des brevets

(11) Publication number: **0 372 250**
**A2**

## (12) EUROPEAN PATENT APPLICATION

(21) Application number: **89120774.8**

(22) Date of filing: **09.11.89**

(51) Int. Cl.⁵: **G11B 15/43, G11B 15/665,**
**G11B 15/29, G11B 15/20**

(30) Priority: **07.12.88 JP 307812/88**

(43) Date of publication of application:
**13.06.90 Bulletin 90/24**

(84) Designated Contracting States:
**DE GB**

(71) Applicant: **HITACHI, LTD.**
**6, Kanda Surugadai 4-chome Chiyoda-ku**
**Tokyo(JP)**

(72) Inventor: **Tsubota, Shinya**
**611-46, Motoishikawacho**
**Mito-shi(JP)**

(74) Representative: **Altenburg, Udo, Dipl.-Phys. et al**
**Patent- und Rechtsanwälte**
**Bardehle-Pagenberg-Dost-Altenburg &**
**Partner Postfach 86 06 20**
**D-8000 München 86(DE)**

(54) **Magnetic recording/playback apparatus.**

(57) A magnetic recording/playback apparatus, such as a VTR, of the type in which power is transmitted from a pulley provided on a DD capstan motor to a tape rewinding mechanism through a belt. The apparatus is provided with a tension imparting member 44 capable of coming into and out of contact with the recording tape and arranged to press the recording tape by a predetermined pressure by means of the urging force of an urging spring while signals are being recorded on the recording tape, while signals recorded on the recording tape are being played back, and in a pause. During the pause, the tension imparting member serves to prevent tension from decreasing due to the looseness of the recording tape due to the backlash of the belt.

FIG. 1

# MAGNETIC RECORDING/PLAYBACK APPARATUS

## BACKGROUND OF THE INVENTION

### FIELD OF THE INVENTION

The present invention relates to a magnetic recording/playback apparatus and, more particularly, to a mechanism for imparting tension to a magnetic tape in such an apparatus.

### DESCRIPTION OF THE RELATED ART

An arrangement in which power is transmitted from a pulley provided on a direct drive capstan motor (DD capstan motor) to a rewinding mechanism through a belt is generally known as a take-up-reel driving mechanism in a magnetic recording/playback apparatus such as a video tape recorder (VTR).

In such a magnetic recording/playback apparatus, in a pause during recording or playback, namely, a mode called "pause", "still" or "slow", when the running of the capstan motor is stopped, it is necessary to apply a certain brake load to the motor. The reason for this is that a so-called backlash-the phenomenon in which the capstan motor itself is reversed due to tension created by extension or contraction of the aforesaid power transmission belt. When this backlash phenomenon occurs, tension which acts on the recording tape lowers, thus resulting in the deterioration in apparatus performance which may lead to, for example, the occurrence of noise on a screen. One method of applying a brake load is to press a brake pad or the like against the outer periphery of the rotor (or object integral therewith) of the capstan motor. A method employing a solenoid is disclosed in, for example, Japanese Patent Unexamined Publication (called Tokkyo Kohkai) No. 60-171657. In the VTR disclosed in Tokkyo Kohkai 60-171657, a solenoid (75) is utilized to bring a brake pad (77) into and out of contact with the lower face of a fly wheel (74) which is secured to the capstan shaft (72) of a capstan motor (73).

In such a conventional example of the type in which the brake pad is pressed against the outer periphery of the rotor (or object integral therewith) of the capstan motor, a transition period is required to cause the mechanism to proceed to a brake mode and, in addition, an exclusive space for the brake mechanism needs to be assured. As a result, there are a number of problems: for example, (1) insufficient operational response; (2) an increase in the complexity of the structure of the apparatus;

and (3) deviation from the general trend toward miniaturization of the apparatus. The above-described arrangement in which the brake pad is moved by the solenoid also involves a number of problems: for example; (1) large electric power is required to activate the solenoid; (2) the reliability of the operation is insufficient; (3) an increase in the weight of the apparatus is incurred; and (4) costs are increased due to the expensive price of the solenoid.

## SUMMARY OF THE INVENTION

It is a primary object of the present invention to solve the above-described problems involved in the prior art.

This object is achieved by providing an improvement in a magnetic recording/playback apparatus of the type which utilizes a take-up reel driving mechanism arranged to transmit power from a pulley to a take-up reel driving mechanism through a belt, the pulley being provided on a direct drive capstan motor, and which is arranged to draw a recording tape into a predetermined path for purposes of recording or playback. The improved magnetic recording/playback apparatus is provided with a rotary head cylinder arranged to record signals on the recording tape and to play back signals recorded on the recording tape; a pinch roller cooperative with a capstan shaft to clamp and drive the recording tape; and a tension imparting member capable of coming into and out of contact with the recording tape and arranged to press the recording tape by a predetermined pressure by means of the urging force of an urging spring during one of recording, playback and a pause.

The tape tension imparting member operates in accordance with a decrease in tape tension which occurs when the recording tape is reversed due to the backlash of the capstan motor which is caused by the extension or contraction of the belt through which power is transmitted from the direct drive capstan motor to the take-up-reel driving mechanism. In consequence, the decrease in tape tension is prevented.

To explain in further detail, the tape tension imparting member can be urged by a spring, e.g., a torsion spring, to come into and out of contact with the recording tape, and serves to impart a predetermined tape tension to the recording tape in contact relationship therewith in a pause during the process of playing back signals recorded on the recording tape or recording signals on the recording tape. The urging force of the spring is made sufficiently small compared to the tape tension created in a normal recording/playback state. Accordingly, while signals are being recorded or recorded signals are being played back, the tape tension imparting member is forced back by the recording tape with the contact relationship maintained, and the tape tension imparting member therefore has no effect on the state of tape running. When the backlash of the power transmission belt occurs during a pause, the capstan shaft is reversed to make the recording tape loose. However, the tape tension imparting member absorbs the looseness of the recording tape by pressing the recording tape and displacing it from the ordinary running path, thereby impart a predetermined tape tension to the recording tape, so that any drawback due to a decrease in tape tension is prevented.

It is preferable that the tape tension imparting member be placed in interlocked relationship with a pinch roller driving mechanism for moving the pinch roller toward and away from the capstan shaft so that, when the pinch roller is placed at a stand-by position away from the capstan shaft, the tape tension imparting member is retracted into its stand-by position at which it does not contact the recording tape. More specifically, as a cassette is loaded into or unloaded from the apparatus or the recording tape is fed forward or rewound, the pinch roller is consistently placed in its stand-by position. Accordingly, if, as one recommended form of working example, the pinch roller driving mechanism and the tape tension imparting member are arranged in interlocked relationship and the tape tension imparting member is arranged to move to the stand-by position in accordance with the movement of the pinch roller, it becomes unnecessary to separately provide a driving mechanism for the tape tension imparting member.

Accordingly, in one preferred feature of the present invention, there is provided with a magnetic recording/playback apparatus of the type which utilizes a take-up reel driving mechanism arranged to transmit power from a pulley to a rewinding mechanism through a belt, the pulley being provided on a direct drive capstan motor, and which is arranged to draw a recording tape into a predetermined path for purposes of recording or playback. This apparatus is provided with: a rotary head cylinder arranged to record signals on the recording tape and to play back signals recorded on the recording tape; a pinch roller cooperative with a capstan shaft to clamp and drive the recording tape; a pivotal arm for the pinch roller arranged to reciprocally pivot in accordance with the motion of a cam member driven by a motor; a pinch roller shaft secured to one end of the pivotal arm for supporting the pinch roller; an operative arm for the tape tension imparting member pivotally supported at one end by the pinch roller shaft and provided with a slot at the other end, the shaft for the tape tension imparting member extending through the slot, the operative arm being restricted by the shaft for the tape tension imparting member at the other end but permitting the pivotal motion of the pivotal arm for the pinch roller within a predetermined range in that the shaft for the tape tension imparting member can be relatively displaced in the slot; a tape tension imparting member pivotally supported at one end on said shaft for said tape tension imparting member and provided with a pressure member at the other end and a projection at or near the other end, the pressure member extending parallel with the axis of the shaft for the tape tension imparting member and serving to smoothly guide the recording tape in contact therewith; and a torsion spring fitted onto the shaft for the tape tension imparting member at its proximal end, one of two free ends of the torsion spring being secured to the operative arm for the tape tension imparting member with the other free end engaged with the pressure member or a part near the pressure member, the torsion spring urging the tape tension imparting member to cause it to pivot, thereby bringing the pressure member into contact with the recording tape, the operative arm for the tape tension imparting member having a limiting opening integral with or separate from the slot and serving to limit the range of pivotal motion of the tape tension imparting member. When the operative arm for the tape tension imparting member and the pinch roller and retracted into the stand-by position, the projection is engaged with one side wall of the limiting opening to hold the tape tension imparting member in a stand-by position where the pressure member is kept away from the recording tape. When the operative arm for the tape tension imparting member and the pinch roller are shifted to the position of the recording tape, the pressure member is brought into contact with the pressure member so that the tape tension imparting member is forced back by the tension of the recording tape to engage the projection with the side wall of the limiting opening which is opposite to the aforesaid one side wall.

Other objects and features of the present invention will become apparent from the following explanation with reference to the accompanying drawings.

## BRIEF DESCRIPTION OF THE DRAWINGS

Fig. 1 is a plan view showing the essential portion of a video tape recorder (VTR) as a first embodiment of the present invention, that is, a pinch roller and tension imparting members;

Fig. 2 is a plan view showing a mechanism for driving reel supporting disks in the VTR of Fig. 1;

Fig. 3 is a partially cross-sectional side elevational view showing the essential portion of the reel-supporting-disk driving mechanism of Fig. 2;

Fig. 4 is a partially cross-sectional side elevational view showing the essential portion of another part of the reel-supporting-disk driving mechanism of Fig. 2;

Fig. 5 is a plan view showing the primary inner mechanism of the VTR;

Fig. 6 is a plan view showing a mechanism for driving the pinch roller;

Fig. 7 is a plan view similar to Fig. 5, and serves to illustrate the state of the inner mechanism during tape running;

Fig 8 is a plan view similar to Fig. 6, and serves to illustrate the state of the inner mechanism during running of recording tape;

Fig. 9 is an essential enlarged view of Fig. 8; and

Fig. 10 is an essential enlarged view similar to Fig. 8, and servs to illustrate a state wherein the recording tape is running in the opposite direction.

## DESCRIPTION OF THE PREFERRED EMBODIMENT

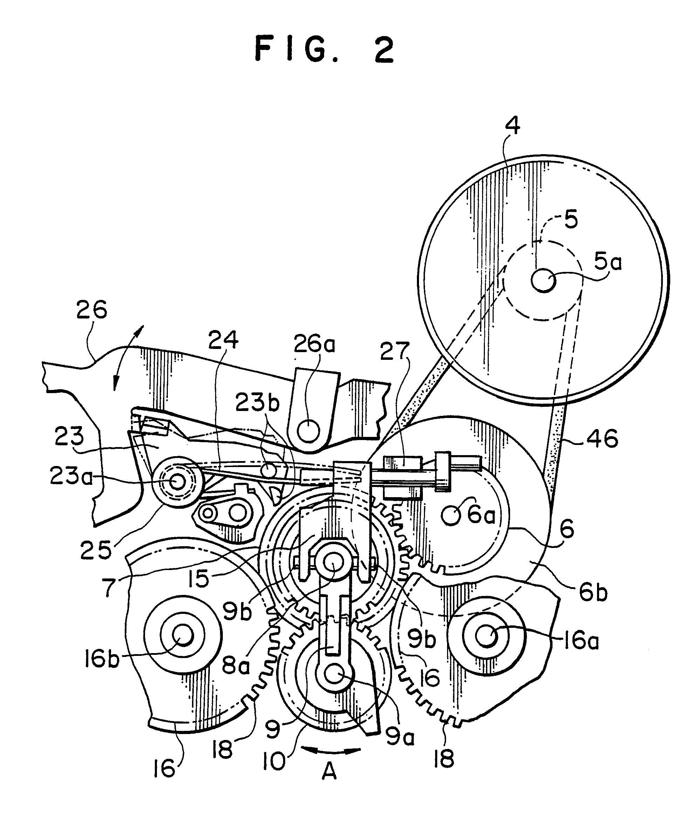

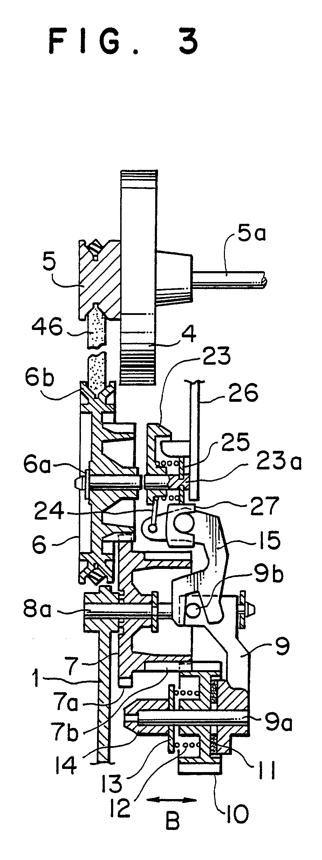

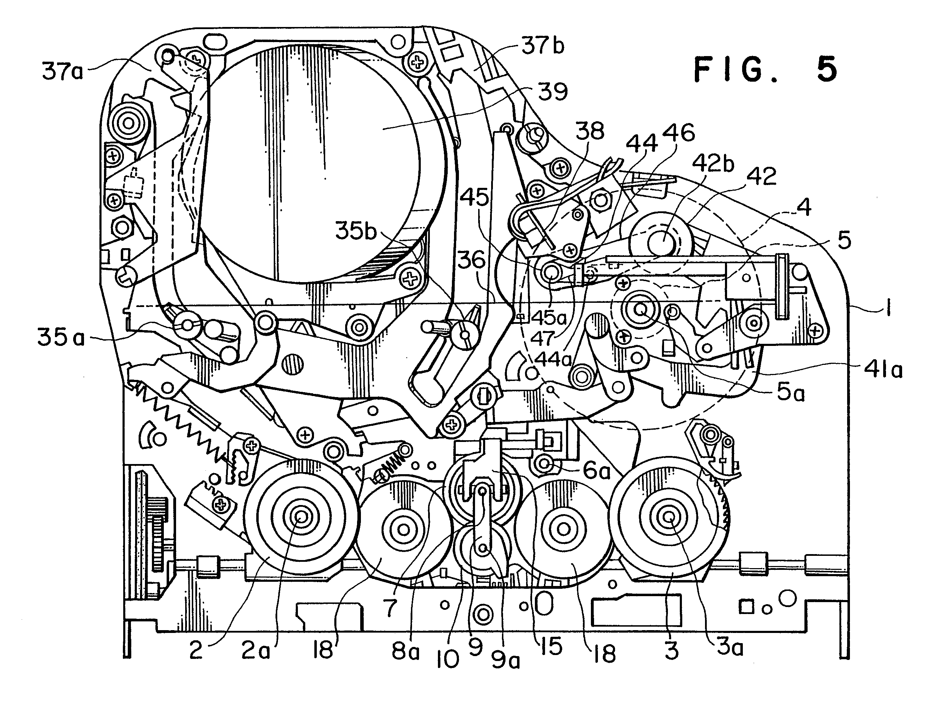

Fig. 5 shows the whole of the primary inner mechanism of a VTR according to a first embodiment of the present invention when in a stop mode. Figs. 2 and 3 shows the essential portion of that mechanism. As illustrated, a pair of reel shafts 2a and 3a is provided on a chassis (or board) 1, and reel supporting disks 2 and 3 are rotatably fitted onto the reel shafts 2a and 3a, respectively. A capstan (or capstan shaft) 5a is disposed integrally with the rotor of a DD capstan motor 4, and a pulley 5 is fitted onto the capstan 5a so that the pulley 5 can rotate integrally with the capstan 5a.

A shaft 6a is mounted on the chassis 1 in an upright posture, and a pulley gear 6 made up of a pulley 6b and a gear is rotatably fitted onto the shaft 6a. A belt 46 is passed around the pulley 6b and a pulley 5. A shaft 8a is a fixed shaft which is located in the middle of the interval between the reel shafts 2a and 3a (a position corresponding to approximately half the distance between these shafts), and a driving gear 7 which is meshed with the pulley gear 6 is rotatably fitted onto the shaft 8a (refer to Figs. 2 and 3). The driving gear 7 is a vertical two-stage gear which consists of gears 7a and 7b. The driving gear 7 (or gear 7b) is meshed with a rotatable idler gear 10 which is fitted onto a shaft 9a. The shaft 9a is secured to one end of an idler arm 9 which is pivotally supported on a pivot shaft 8a. A felt spacer 11 is interposed between the idler arm 9 and the idler gear 10. The felt spacer 11 is supported on its back side by the gear 10 which is urged to push the spacer 11 by a spring (or compression coiled spring) 12 supported on a spring seat 13 backed up by a stopper 14 secured to the end of the shaft 9a which is opposite to the idler arm 9. The spring 12 is held between the idler gear 10 and the spring seat 13 fitted onto the shaft 9a. The resilient force of the spring 12 strongly forces the felt spacer 11 against the ideler arm 9 to produce the friction torque required to cause oscillation of the arm 9 (as indicated by double-headed arrow A in Fig. 2). The idler arm 9 is movable in the vertical opposite directions along the pivot shaft 8a as indicated by double-headed arrow B (refer to Fig. 3). The vertical position of the idler arm 9 is determined by a switching arm 15 which is arranged to retain bosses 9b (or engagement pins) which is provided on the idler arm 9.

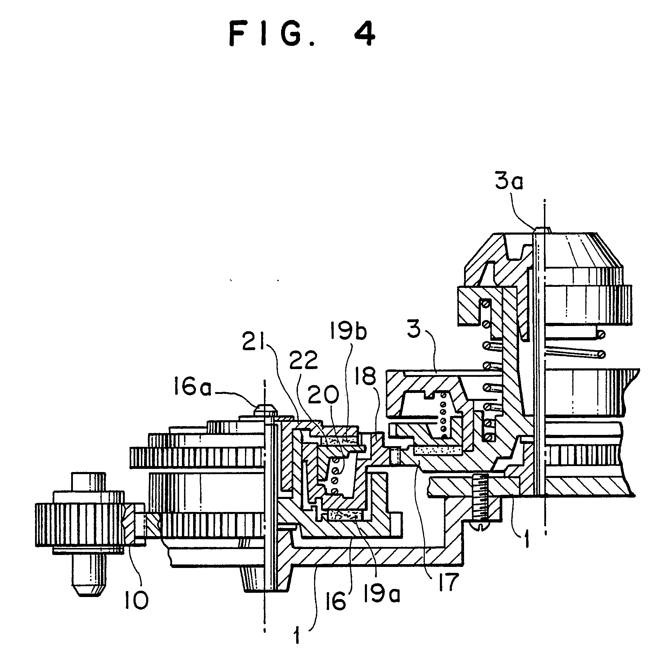

It is assumed here that the switching arm 15 is located at a lower position to hold the idler arm 9 at a corresponding lower position. (Incidentally, in Fig. 3, the swtiching arm 15 is shown as being located at an upper position. Fig. 4 is a cross-sectional view showing the reel supporting disk 3 and a coupling mechanism associated therewith. The idler gear 10 is meshed with a coupling gear 16, and the gear 16 and a gear 18 which is meshed with a gear portion 17 of the reel supporting disk 3 are arranged to generate a predetermine torque by means of an existing friction coupling mechanism made up of felt spacers 19a, 19b, a spring 20, a stopper 21 and a pressure member 22. The aforesaid gears 16 and 18 are supported for rotation about shafts 16a and 16b on the chassis 1, respectively.

Referring to Fig. 2, a switching arm 23 is pivotally supported by a pivot shaft 23a on the chassis 1 and is pressed in position by the cooperation between a torsion spring 24 and a stop washer 25. The switching arm 23 retains an arm of the torsion spring 24 between a pair of projections 23b so that it is biased by the resulting spring force in one direction as shown by a dot-dashed line. The end portion of the arm of the torsion spring 24 extends into an opening formed in the switching arm 15. The switching arm 15 is pivotally supported by a bearing 27, which is provided on the chassis 1, so that it can rotate about an axis parallel to the upper surface of the chassis 1.

The idler arm 9 moves up and down along the shaft 8a in accordance with the pivotal motion of the switching arm 15 so that the idler gear 10 can selectively engage with the coupling gear 16 and the gear 18. In this arrangement, if a strong torque is needed for purposes of forward feed or rewinding, the idler arm 9 moves to its upper position (the state shown in Figs. 2 and 3) to engage the idler gear 10 with the gear 18. Accordingly, the rotational force is directly transmitted to the gear portion 17 of the reel supporting disk 3 so that the rotational torque of the DD capstan motor 4 is transmitted to the reel supporting disks 2 and 3 through the belt 46 with the coupling mechanism described above bypassed. The switching arm 23 which is pivotally supported on the chassis 1 is rotated in the clockwise direction by a cam arm 26 which will be described later. When the switching arm is rotated by a predetermined amount, the arm of the torsion spring 24, which is retained between the projections 23b uprightly provided on the switching arm 23, is biased in the clockwise direction as in Fig. 2 (as shown by a solid line). The switching arm 15 is thereby urged in the counterclockwise direction as viewed in the side elevational view of Fig. 3.

Referring to Fig. 5, an arm 44 is pivotally supported at a location below a fixed guide 45 by a pivot shaft 45a (which is a pivot shaft serving to impart tape tension) of the fixed guide (tape guide post) 45 which serves to define the running height of recording tape 36. A pin 44a which serves as a pressure member is uprightly provided on one end of the arm 44. The pin 44a is located so that it can come into contact with the recording tape 36 positioned between the capstan shaft 5a and the fixed guide 45 and the pinch roller 42. By rotating the arm 44 about the pivot shaft 45a, the pin 44a can be pressed against the recording tape 36 by a predetermined amount during reproduction.

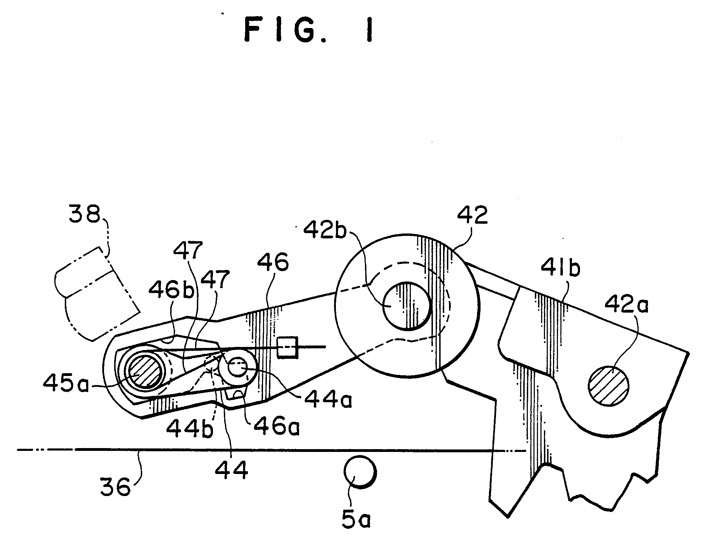

Referring to Fig. 1, a slider 46 serving as an arm for operating the tape tension imparting member is pivotally fitted onto a shaft 42b which supports the pinch roller 42 for rotation about its axis. The slider 46 is arranged to be relatively displaced in sliding contact with the outer periphery of the proximal end portion of the arm 44 which is fitted onto the pivot shaft 45a. A slot 46b and a limiting opening 46a which extends from it are formed in the slider 46, and a projection 44b of the arm 44 is engaged with this opening. A torsion spring 47 is looped around the pivot shaft 45a to urge the arm 44 in the counterclockwise direction.

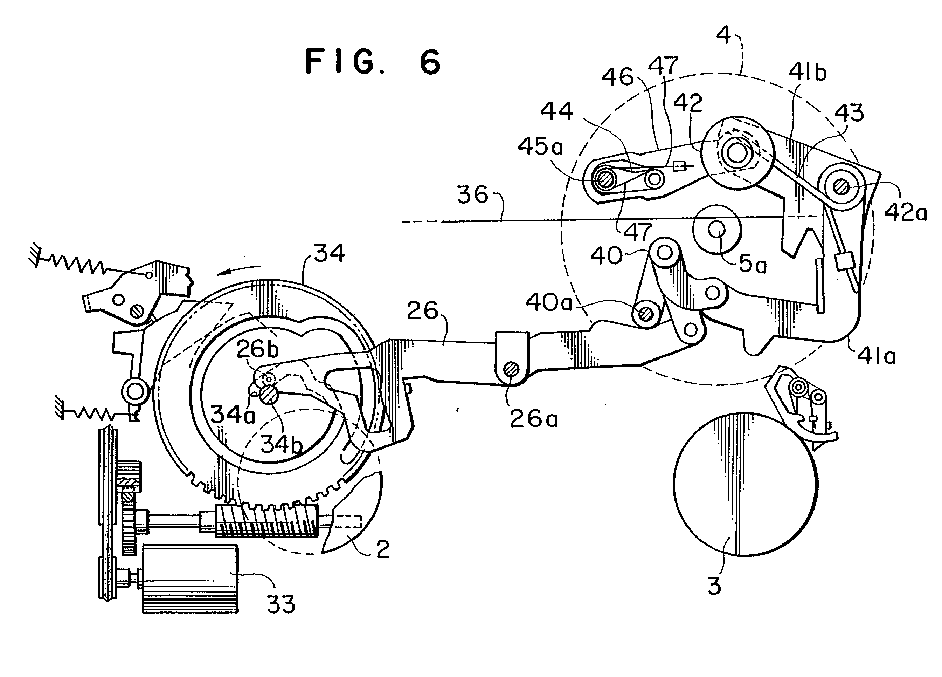

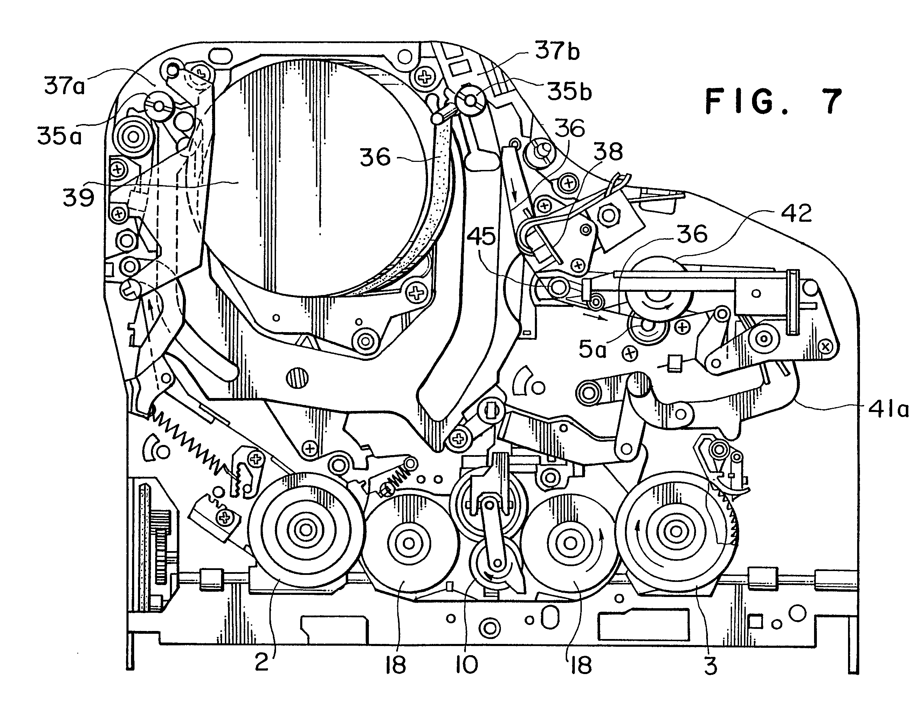

Then, an arrangement associated with the driving system is briefly explained. Referring to Fig. 6, as a reversible loading motor 33 runs in one direction, a cam gear 34 is caused to rotate by means of a predetermined speed reducing mechanism in the counterclockwise direction. Simultaneously, a known speed reduction driving mechanism which is not shown is activated to drive the tape guide members 35a and 35b shown in Fig. 5, thereby drawing the recording tape 36 out of a tape cassette (not shown). Then, the tape guide members 35a and 35b are, as shown in Fig. 7, moved into contact with corresponding stoppers 37a and 37b to wind the recording tape 36 around a rotary head cylinder 39. At this time, the recording tape 36 is also brought into contact with a sound controlling head 38 (refer to Figs. 5, 7 and 10). In this manner, a predetermined tape running path is formed as shown in Fig. 7.

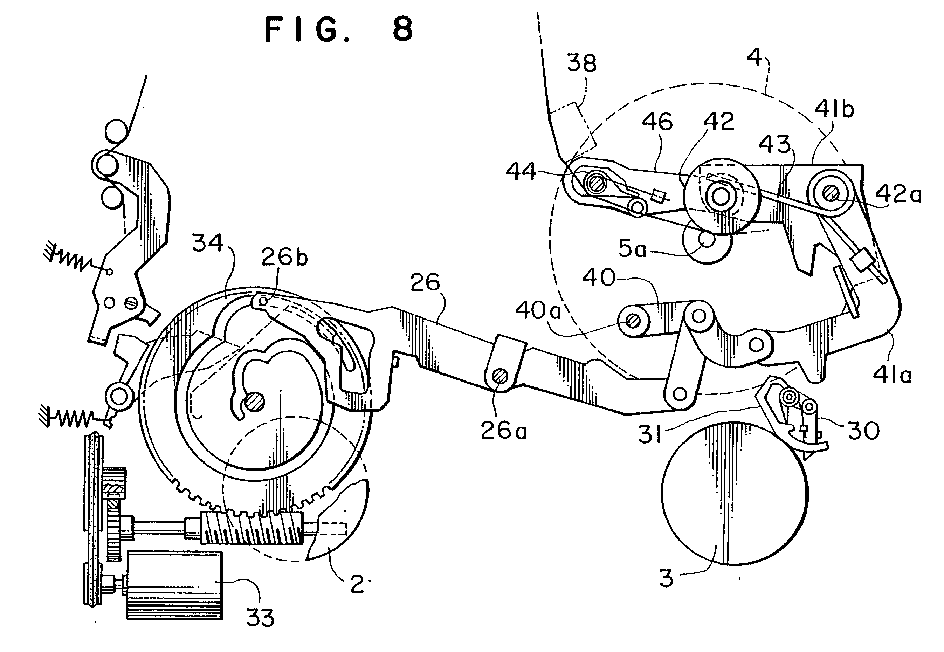

Referring back to Fig. 6, the cam gear 34 is rotatably supported by a shaft 34b on the chassis 1, and a cam groove 34a is formed in one side of the cam gear 34. The cam arm 26 having an uprightly extending pin 26b is pivotally fitted onto a shaft 26a on the chassis 1, and the pin 26b is engaged with the cam groove 34a. As the cam gear 34 rotates, the cam arm 26 is caused to rotate in accordance with a predetermined cam lift. The other end of the cam arm 26 is engaged with a link mechanism 40 which is pivotally supported by a shaft 40a on the chassis 1, thereby constituting an existing toggle mechanism. When the pinch roller 42 is pressed against the capstan 5a, the cam arm 26 acts to urge a first pinch roller arm 41a as shown in Fig. 8. Although no detailed explanation is given, the first pinch roller arm 41a is supported pivotally about the shaft 42a on the chassis 1 and is combined with a second pinch roller arm 41b in pairs. A torsion spring 43 is set between the first pinch roller arm 41a and the second pinch roller arm 41b so as to create a predetermined force which acts to press the pinch roller 42.

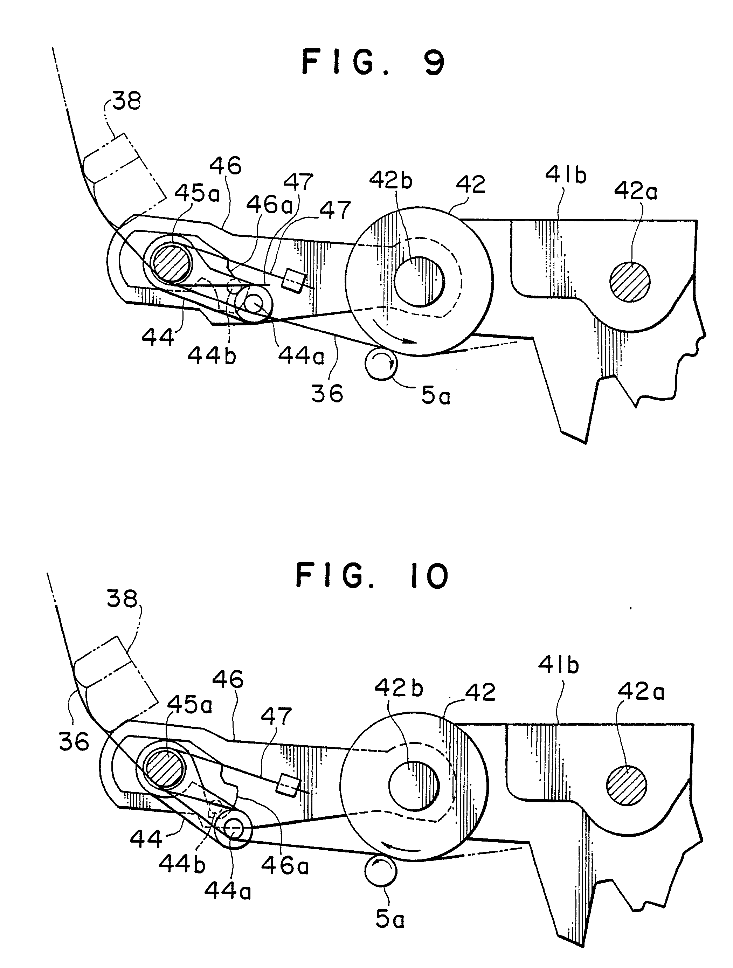

As described previously in connection with Fig. 1, the slider 46, which is supported pivotally about the shaft 42b of the pinch roller 42, is arranged to be relatively displaced in sliding contact with the outer periphery of the proximal end portion of the arm 44 which is fitted onto the pivot shaft 45a. Accordingly, as the pinch roller arm 41b rotates, the slider 46 is displaced relative to the proximal end portion of the arm 44. During this time, the limiting opening 46a of the slider 46 having a cam-like configuration is engaged with the projection 44b of the arm 44 which is urged for rotation, and limits the projection 44b in position, thereby determining the attitude of the entire arm 44. More specifically, when the tape guide members 35a and 35b are located at a casette loading position, the arm 44 is sufficiently set aside from the position of the recording tape 36 so as not to hinder loading or unloading of a tape cassette. As shown in Figs. 7 and 9, when the pinch roller 42 is pressed against the capstan 5a, that is, in a pause mode during recording or playback, the projection 44b of the arm 44 is released from its limited state to allow the pin 44a to press the recording tape 36 by the rotational urging force of the torsion spring 47. During a recording or playback mode, however, the tape tension created at this part is normally on the order of 60-100 gram. Accordingly, by setting the rotational urging force to a pressure of 10 gram or less, the arm 44 is rotated in the counterclockwise direction to bring the projection 44b into contact with one side wall of the slider 46 which faces the limiting opening 46a, thereby determining the position of the pin 44a as illustrated.

The following is an explanation of the operation of the aforesaid mechanism during a pause mode. Although no detailed explanation is given, if an operator presses a "pause" switch (not shown), the driving of the recording tape 36 is stopped, that is, the capstan motor 4 of Fig. 2 stops. At this time, the belt 46, which is passed around the pulley 5 of the capstan motor 4 and the pulley gear 6 of a tape rewinding mechanism, acts to cancel the difference in tension between an extended portion and a contracted portion, thereby causing reversal of the capstan motor 4, namely, a so-called backlash. Accordingly, in Fig. 10, the recording tape 36 is also reversed by a slight amount to reduce the tape tension. At this time, however, the pin 44a, which is uprightly provided on the arm 44, acts to presses the recording tape 36 by an amount corresponding to a decrease in the tape tension, and the arm 44 is displaced in the clockwise direction. The pin 44a on the arm 44 suffices to press the portion of the recording tape 36 which is very near to a loosened portion to such an extent that the looseness is adequately absorbed. It is therefore possible to set the pressure of the pin 44a to a sufficiently small level. In this maner, since the recording tape 36 is pressed in accordance with the tape tension, it is possible to obtain the required tension without the use of any drive source. In many cases, a decrease in tape tension at a tape entrance side around the rotary head cylinder 39 becomes problem in terms of performance. However, even if the aforesaid pressure is set to the sufficiently small level, a decrease in tape tension at the tape entrance side around the rotary head cylinder 39 can be minimized owing to contract loads produced between the recording tape 36 and the tape guide post 45, the sound controlling head 38, the tape guide member 35b and other elements. Accordingly, the deterioration of the performance is lessened.

As is apparent from the foregoing, a magnetic recording/playback apparatus according to the present invention have been proposed. With this apparatus, even if a backlash occurs in the motion of a capstan motor immediately after a pause, it is possible to prevent an excessive decrease in tape tension and the deterioration of performance.

**Claims**

1. A magnetic recording/playback apparatus of the type which utilizes to take-up reel driving mechanism arranged to transmit power from a pulley to a rewinding mechanismm through a belt, said pulley being provided on a direct drive capstan motor, and which is arranged to draw a recording tape into a predetermined path for purposes of recording or playback, comprising:
a rotary head cylinder arranged to record signals on said recording tape to play back signals recorded on said recording tape;
a pinch roller cooperative with a capstan shaft to clamp and drive said recording tape; and
a tension imparting member capable of coming into and out of contact with said recording tape and arranged to press said recording tape by a predetermined pressure by means of the urging force of an urging spring while signals are being recorded on said recording tape, while signals recorded on said recording tape are being played back, and in a pause.

2. A magnetic recording/playback apparatus according to claim 1, wherein said tape tension imparting member is disposed at a location corresponding to the tape running section between the position of a sound controlling head and the position at which said recording tape is clamped between said capstan shaft and said pinch roller.

3. A magnetic recording/playback apparatus according to claim 1, wherein said tape tension imparting member is a member which serves to displace said recording tape from an ordinary running path during a pause to thereby absorb the looseness of said recording tape and impart a predetermined tension to said recording tape.

4. A magnetic recording/playback apparatus according to claim 1, wherein said tape tension imparting member urged by an urging spring is a pivotal member which pivots on a shaft, said tape tension imparting member bearing at one end a pressure member which smoothly guides said recording tape in contact therewith.

5. A magnetic recording/playback apparatus according to claim 4, wherein the pressure member of said tape tension imparting member is kept away from said recording tape except when signals are recorded on said recording tape, except when signals recorded on said tape are played back and except during a pause.

6. A magnetic recording/playback apparatus according to claim 4, wherein a shaft for said tape tension imparting member is secured to a board.

7. A magnetic recording/playback apparatus of the type which utilizes a take-up reel driving mechanism arranged to transmit power from a pulley to a rewinding mechanism through a belt, said pulley being provided on a direct drive capstan motor, and which is arranged to draw a recording tape into a predetermined path for purposes of recording or playback, comprising:

a rotary head cylinder arranged to record signals on said recording tape and to play back signals recorded on said recording tape;

a pinch roller cooperative with a capstan shaft to clamp and drive said recording tape;

a pivotal arm for said pinch roller arranged to reciprocally pivot in accordance with the motion of a cam member driven by a motor;

a pinch roller shaft secured to one end of said pivotal arm for supporting said pinch roller;

an operative arm for said tape tension imparting member pivotally supported at one end by said pinch roller shaft and provided with a slot at the other end, said shaft for said tape tension imparting member extending through said slot, said operative arm being restricted by said shaft for said tape tension imparting member at said other end but permitting the pivotal motion of said pivotal arm for said pinch roller within a predetermined range in that said shaft for said tape tension imparting member can be relatively displaced in said slot;

a tape tension imparting member pivotally supported at one end on said shaft for said tape tension imparting member and provided with a pressure member at the other end and a projection at or near said other end, said pressure member extending along the axis of said shaft for said tape tension imparting member and serving to smoothly guide said recording tape in contact therewith; and

a torsion spring fitted onto said shaft for said tape tension imparting member at its proximal end, one of two free ends of said torsion spring being secured to said operative arm for said tape tension imparting member with said other free end engaged with said pressure member or a part near said pressure member, said torsion spring urging said tape tension imparting member to cause it to pivot, thereby bringing said pressure member into contact with said recording tape;

said operative arm for said tape tension imparting member having a limiting opening integral with or separate from said slot and serving to limit the range of pivotal motion of said tape tension imparting member;

when said operative arm for said tape tension imparting member and said pinch roller are retracted into the stand-by position, said projection being engaged with one side wall of said limiting opening to hold said tape tension imparting member in a stand-by position where said pressure member is kept away from said recording tape; and

when said operative arm for said tape tension imparting member and said pinch roller are shifted to the position of said recording tape, said pressure member being brought into contact with said pressure member so that said tape tension imparting member is forced back by the tension of said recording tape to engage said projection with the side wall of said limiting opening which is opposite to said one side wall.

8. A magnetic recording/playback apparatus according to claim 7, wherein a tape guide post is secured to said shaft for said tape tension imparting member.

# FIG. I

EP 0 372 250 A2

# F I G. 2

# FIG. 3

# FIG. 4

FIG. 5

EP 0 372 250 A2

# FIG. 6

EP 0 372 250 A2

FIG. 7

FIG. 8

# FIG. 9

# FIG. 10